# EUROPEAN PATENT SPECIFICATION

(11) **EP 3 893 636 B1**
(45) Date of publication and mention of the grant of the patent: **05.04.2023**
(21) Application number: 19842841.9
(22) Date of filing: 09.12.2019
(51) Int. Cl.: A01M 7/00, B05B 11/00, A01M 1/20, B05B 9/08

(54) **SPRAY GUN**
SPRITZPISTOLE
PISTOLET PULVÉRISATEUR

(30) Priority: 11.12.2018 IT 201800003915 U
(43) Date of publication of application: 20.10.2021
(73) Proprietor: Cooperativa Sociale la Pieve - Societa' Cooperativa - Onlus, 48124 San Michele (RA) (IT)
(72) Inventor: BALDRATI, Idio, 48123 Ravenna (IT); PORTALE, Salvatore, 48122 Ravenna (IT); PORTALE, Francesco, 48125 Ravenna (IT)
(74) Representative: Roncuzzi, Davide
(86) International application number: PCT/IB2019/060559
(87) International publication number: WO 2020/121156

(56) References cited:
- EP-A1- 3 406 137
- WO-A1-2018/011012
- WO-A2-2012/097361
- US-A1- 2008 061 166

## Description

The present invention concerns a spray gun for a dosing device. In particular, the present invention refers to a spray gun for a dosing device designed to deliver liquid at a distance from the operator in confined environments.

### DESCRIPTION OF THE STATE OF THE ART

In the pest control sector, it is common practice to use organic or inorganic substances, natural substances or substances produced by a synthesis process, the action of which must be toxic in order to cause death.

If the target is the tiger mosquito, or any other species of insects, an appropriate strategy to counter the spread thereof must necessarily consider the respective habits of the insect. In the case of the female tiger mosquito, or of any other species with the same habits, control is very effective if practised with larvicides distributed in roadside rainwater traps, accessible through respective storm drains, and in private areas such as apartment blocks or houses, in ponds, in the cavities of trees and in similar environments or, more simply, in flowerpots or flowerpot dishes.

The delivery of said mosquito larvicides is normally carried out via the use of portable systems provided with a spray gun supplied by an electrically operated pump which draws the liquid from a tank. The applicant is the holder of the Italian patent application no. 102017000055422 relative to a portable system for the delivery of insecticides, which allows substantially "point" treatments to be carried out, targeted at one specific objective, even when said objective is accessible through a small opening. The system subject of the application `422 comprises the use of a spray gun provided with a handle for the respective manipulation terminating in a tubular duct provided at the end with an injector. Said system is designed to be installed on motorcycle luggage racks to facilitate the use thereof along roads and allow the treatment to be carried out reasonably quickly over large areas, thus maximizing the effectiveness. The use of an injector is particularly effective as it allows insecticide consumption to be optimized, avoiding dripping and allowing fine adjustment of the dose to be delivered for each shot of insecticide, determined by the operation of a switch associated with the handle of the spray gun. On the other hand, in construction terms the injectors are delicate and costly devices, since the spray gun is frequently used from on board the motorcycle for reasons of speed and practicality, the operator may find himself handling the spray gun off balance, with the risk of damaging the end of the latter, and therefore the relative injector. If this occurs the spray gun is temporarily unserviceable until the damaged injector is replaced. It is easy to understand that this drawback is particularly unwelcome, since it can compromise the effectiveness of the treatment to be carried out or, in any case, easily increase the cost of the treatment due to the need for warehouse stocks of injectors sufficient to minimize service interruptions during maintenance work on the spray gun. The above clearly shows that the need to make the spray gun more robust, maintaining the same method of use and reducing production costs and the number of components to be kept in stock to ensure correct operation, has not been met and represents an interesting challenge for the applicant.

### SUMMARY OF THE PRESENT INVENTION

The present invention concerns a spray gun for a dosing device. In particular, the present invention refers to a spray gun for a dosing device designed to deliver liquid at a distance from the operator in confined environments. According to the present invention an insecticide dosing system is provided with a spray gun, the main characteristics of which will be described in at least one of the following claims.

According to some embodiments of the present invention, a spray gun for liquid is provided equipped with a handle for the relative manipulation; an inlet mouth that can be hydraulically connected to a tank by the interposition of a solenoid valve; an outlet mouth connected to a fluid-tight tubular duct; said tubular duct having a respective end portion provided with a liquid-controlled outlet valve at a pressure value higher than a given calibration value. If deemed useful, the valve is provided with a normally open nozzle.

In some cases, said valve is an elastic return valve.

According to a variation of the present invention, a liquid dosing device comprises a container containing at least one tank for said liquid; a spray gun hydraulically connected to said at least one tank and which can be supplied, in use, by an electrically operated pump hydraulically connected to said at least one tank through a supply duct and to said spray gun through a delivery duct; electrical power-supply means electrically connected to said pump for operation of the latter; control means electrically connected to said supply means and electronically to said pump to control the operation thereof; said spray gun having an inlet mouth that can be hydraulically connected to a tank by the interposition of a solenoid valve; an outlet mouth being connected to a fluid-tight tubular duct; characterized in that said tubular duct has a respective end portion provided with a liquid-controlled outlet valve at a pressure value higher than a given calibration value.

According to a preferred variation, said control means comprise a switch electronically connected to said pump and measurement means for measuring the supply pressure of said liquid to said valve; said switch and said measurement means being associated with said handle.

In some cases, said pressure measurement means comprise a pressure gauge hydraulically connected to said delivery duct.

In other cases, the device comprises two said tanks, each being hydraulically connected to said delivery duct by a T-fitting.

At times it is deemed useful for said control means to comprise a calculation unit incorporating a time meter and a memory unit.

In other cases, said control means comprise a geolocation device connected to said memory unit to associate a geographical position with each operation of said switch.

### BRIEF DESCRIPTION OF THE FIGURES

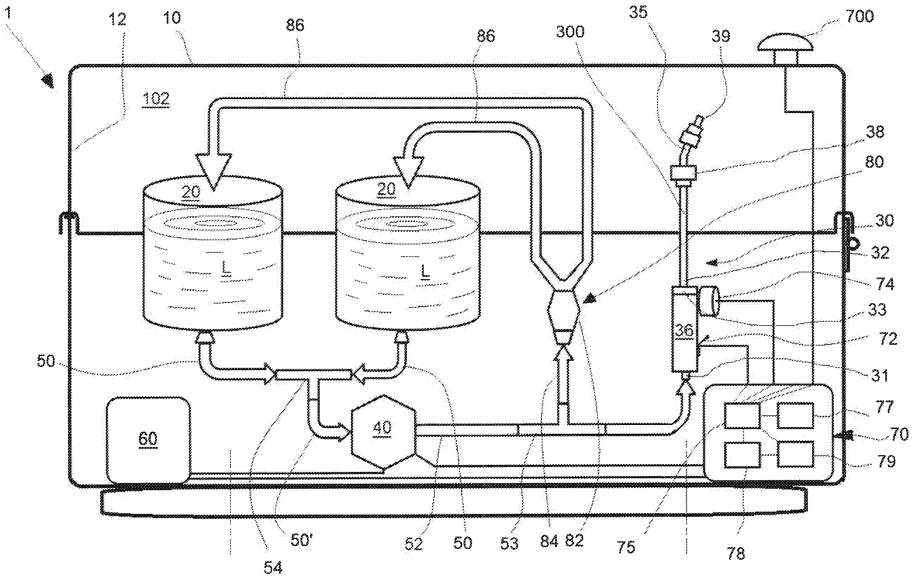

Further characteristics and advantages of the spray gun and dosing device according to the present invention will appear clearer from the following description, with reference to the attached figures which illustrate at least one non-limiting embodiment example, in which identical or corresponding parts of the device are identified by the same reference numbers. In particular:
- the attached figure shows a spray gun and a respective dosing device according to the present invention illustrated by a block diagram.

### DETAILED DISCLOSURE OF THE PRESENT INVENTION

In the attached figure, the number 1 indicates, overall, a dosing device 1 for a liquid L. The device 1 comprises a container 10 provided with a compartment 12 containing at least one tank 20 for the liquid L.

The device further comprises a spray gun 30 hydraulically connected to at least one tank 20, and being supplied, in use, by a pump 40 which, in turn, can be electrically operated and is hydraulically connected to at least one tank 20 through a supply duct 50 which is connected in a fluid-tight manner to a delivery duct 52.

The device 1 further comprises an electrical power-supply unit 60 which is connected to the pump 40 to electrically operate it. A control unit 70 is connected to the power-supply unit 60 and electronically to the pump 40, to control the respective operation thereof in terms of duration of use and flow rate of liquid L delivered through the spray gun 30. In particular, the latter comprises a handle 36 which makes it portable and allows it to be manipulated according to a wide range of operating needs; furthermore, the spray gun 30 has an inlet mouth 31 designed to hydraulically connect said spray gun 30 to a tank 20 and hydraulically communicates with an outlet mouth 32. The latter carries a tubular duct 300, which is hydraulically connected to the outlet mouth 32. The tubular duct 300 has a respective end portion 35 provided with an outlet valve 38 controlled by liquid L at a pressure value higher than a given calibration value. The valve 38 is provided with a normally open nozzle 39 and is of the elastic return type. In the attached figure the outlet mouth 32 is hydraulically connected to the tubular duct 300 by the interposition of a solenoid valve 33, without this limiting the scope of the present invention, in the sense that if said solenoid valve 33 is present, then delivery of the liquid L can be more effectively controlled, but the presence of said solenoid valve and relative electronic control is only one of the possible options that have been considered to implement the present invention.

The control unit 70 comprises a switch 72, which is electronically connected to the pump 40, and a measurement device 74 for measuring the supply pressure of the liquid L to the valve 38. The switch 72 and the measurement device 74 are carried by the handle 36, where the measurement device comprises a pressure gauge 74 hydraulically connected to the delivery duct 52.

In particular, in the attached figure the device 1 is provided with two tanks 20, without this affecting the scope of the present invention. The choice of the number of tanks is linked to the method of use of the device 1, in the sense that said choice depends on the volume of liquid L to be delivered for each outlet of the operator using the device, and by the maximum weight that can be sustained by the operator or the transport device of the device 1. A supply duct 50 corresponds to each tank 20 and the two supply ducts 50 flow into a T-fitting 54 which, in turn, terminates in a supply duct 50' of the pump 40. Again according to the attached figure, the device 1 comprises a limiting device 80 which has the object of containing the supply pressure of the liquid L upstream of the valve 38, therefore in the delivery duct 52 and in the tubular duct 300. Said limiting device 80 comprises a two-way flow adjustment member 82 which is hydraulically connected to the delivery duct 52 through a T-fitting 53 and a service duct 84. Therefore, the limiting member 80 is adapted to supply each tank 20 with liquid L through a recovery duct 86. Since each tank 20 is in aerial communication with the surrounding environment, if, in use, the valve 38 is in a closed configuration and the pressure in the tubular duct 300 is higher than the atmospheric pressure in the tanks 20, the liquid L would have a low pressure escape route towards each tank 20 through the service duct 84, the said flow adjustment member 82 and the two recovery ducts 86.

The control unit 70 further comprises a calculation unit 75 associated with an absolute and relative time meter 77, substantially a digital clock, a memory card 78, and a geolocation device 79. Said components can be used individually or in combination to determine the duration and to associate a given geographical position with the actuation of the spray gun 30, and therefore the delivery of the liquid L through the valve 38, in real or deferred time. Due to its composition, the control unit 70 allows tracking of information relative to date, time, location and duration of each operation of the switch 72 and therefore of the valve 38.

The use of the device 1 can be easily understood from the above description and does not require further explanation. It may be useful to specify that, for the sake of practicality, the calculation unit 75, the time meter 77, the memory card 78 and the geolocation device 79 have been shown in the attached figure as an integral part of the control assembly 70, understood as a unique electronic board, without wishing to limit the scope of the present invention to a solution of this type. In fact, an embodiment in which said components were provided separately, electronically connected to one another for the relative operation and contained overall in the container 10, would be absolutely equivalent in functional terms to the one described above.

In particular, it should be specified that the container 10 can be shaped as required and, in particular, have a plurality of coupling holes for a transport surface known and not illustrated of a bicycle or a motorcycle or a manually towed cart, so as not to weigh on the shoulders of the user who is using it and to make the larvicide treatment practical and safe to implement. Furthermore, the container 10 can be closed at the top by a cover 102, removable or hinged as in the attached figure, facilitating inspection of the compartment 12 and refilling of each tank 20.

The control assembly 70 further comprises an emergency button 700 mushroom-shaped for practicality or shaped in any other way, for use in the event of malfunctioning of the device or any other reason requiring immediate interruption of the delivery. Said button 700 is carried by the cover 102, in particular on the top thereof. Lastly it is clear that modifications and variations can be made to the device 1 described and illustrated here without departing from the scope of the present invention. Based on the above description, using a device for delivering an insecticide like the one described above allows exact calibration of the insecticide liquid to be used for each localized application and avoids losses due to dripping, therefore lowering the cost of supplies due to reduction of waste; consequently, it allows the volume of the insecticide liquid storage tanks and the number of refills to be limited and, relieving the operators of the need to support heavy weights, enables them to carry out a greater number of applications during each spraying session, the capacity of the tank contained in the device being equal, thus overcoming in this manner the difficulties of access to certain types of storm drain, and therefore optimizing daily working times. The use of a device like the device 1 described above is furthermore particularly advantageous since the actuation of the valve 38 does not require any type of power-supply as it is pressure-operated and, at the same time, very accurate. In relation to the above description, the device 1 and in particular the spray gun 30 solve the problem of carrying out larvicide treatments to control tiger mosquitoes and other species having the same larval hotbeds, using calibrated quantities of insecticide liquid without waste due to dripping from the delivery unit, without undermining the physical safety of the operators and allowing control of the application frequency at given points.

## Claims

1. A spray gun (30) for delivering liquid (L), said spray gun (30) being provided with a handle (36), an inlet mouth (31) associated with said handle (36) and hydraulically connected to a tank (20); an outlet mouth (32) associated with said handle (36) and connected to a fluid-tight tubular duct (300); **characterized in that** said tubular duct (300) has a respective end portion (35) provided with a liquid-controlled outlet valve (38) at a pressure value higher than a given calibration value.

2. The spray gun according to claim 1, **characterized in that** said valve (38) is provided with a normally open nozzle (39).

3. The spray gun according to claim 2, **characterized in that** said valve (38) is of the elastic return type.

4. The spray gun according to any one of the claims 1 to 3, **characterized in that** said outlet mouth (32) is hydraulically connected to said tank (20) by the interposition of a solenoid valve (33).

5. A device (1) for dosing liquid (L), said device (1) comprising a container (10) containing at least a tank (20) for said liquid (L); a spray gun (30) according to claim 1 hydraulically connected to said tank (20) and which can be supplied, in use, by an electrically-operated pump (40) hydraulically connected to said tank (20) through a supply duct (50) and to said spray gun (30) through a delivery duct (52); electrical power-supply means (60) electrically connected to said pump (40) for the actuation thereof; control means (70) electrically connected to said power-supply means (60) and electronically to said pump (40) to control the operation thereof; **characterized in that** said spray gun has an inlet mouth (31) hydraulically connectable to a tank (20) by the interposition of a solenoid valve (33); an outlet mouth (32) being connected to a fluid-tight tubular duct (300); **characterized in that** said tubular duct (300) has a respective end portion (35) provided with a liquid-controlled outlet valve (38) at a pressure value higher than a given calibration value.

6. The device according to claim 5, **characterized in that** said valve (38) is provided with a normally open nozzle (39) .

7. The device (1) according to claim 6, **characterized in that** said valve (38) is of the elastic return type.

8. The device according to any one of the claims 5 to 7, **characterized in that** said outlet mouth (32) is hydraulically connected to said tank (20) by the interposition of a solenoid valve (33).

9. The device according to claim 8, **characterized in that** said spray gun (30) comprises a handle (36) for the manipulation thereof.

10. The device according to claim 9, **characterized in that** said control means (70) comprise a switch (72) electronically connected to said pump (40) and measurement means (74) for measuring the supply pressure of said liquid L to said valve (38); said switch (72) and said measurement means (74) being associated with said handle (36).

11. The device according to claim 10, **characterized in that** said pressure measurement means (74) comprise a pressure gauge (74) hydraulically connected to said delivery duct (52).

12. The device according to any one of the preceding claims, **characterized in that** said control means (70) comprise a calculation unit (75) incorporating a time meter (77) and a memory unit (78).

13. The device according to claim 12, **characterized in that** said control means (70) comprise a geolocation device (79) connected to said memory unit (78) to associate a geographical position with each operation of said switch (72) .

## Patentansprüche

1. Spritzpistole (30) zum Abgeben von Flüssigkeit (L), wobei die genannte Spritzpistole (30) versehen ist mit einem Griff (36), einer Einlassöffnung (31), die mit dem genannten Griff (36) assoziiert ist und hydraulisch mit einem Tank (20) verbunden ist; einer Auslassöffnung (32), die mit dem genannten Griff (36) assoziiert ist und mit einer fluiddichten rohrförmigen Leitung (300) verbunden ist; **dadurch gekennzeichnet, dass** die genannte rohrförmige Leitung (300) einen jeweiligen Endabschnitt (35) aufweist, der mit einem flüssigkeitsgesteuerten Auslassventil (38) mit einem höheren Druckwert als einem gegebenen Kalibrierungswert versehen ist.

2. Spritzpistole nach Anspruch 1, **dadurch gekennzeichnet, dass** das genannte Ventil (38) mit einer normalerweise offenen Düse (39) versehen ist.

3. Spritzpistole nach Anspruch 2, **dadurch gekennzeichnet, dass** das genannte Ventil (38) vom elastischen Rückschlagtyp ist.

4. Spritzpistole nach einem der Ansprüche 1 bis 3, **dadurch gekennzeichnet, dass** die genannte Auslassöffnung (32) hydraulisch mit dem genannten Tank (20) durch die Zwischensetzung eines Solenoidventils (33) verbunden ist.

5. Vorrichtung (1) zum Dosieren von Flüssigkeit (L), wobei die genannte Vorrichtung (1) umfasst: einen Behälter (10), der mindestens einen Tank (20) für die genannte Flüssigkeit (L) enthält; eine Spritzpistole (30) nach Anspruch 1, die hydraulisch mit dem genannten Tank (20) verbunden ist und die, im Gebrauch, von einer elektrisch betriebenen Pumpe (40) versorgt werden kann, welche hydraulisch mit dem genannten Tank (20) durch eine Zufuhrleitung (50) und mit der genannten Spritzpistole (30) durch eine Abgabeleitung (52) verbunden ist; elektrische Energiezufuhrmittel (60), die elektrisch mit der genannten Pumpe (40) für deren Betätigung davon verbunden sind; Steuermittel (70), die elektrisch mit den genannten Energiezufuhrmitteln (60) und elektronisch mit der genannten Pumpe (40) verbunden sind, um den Betrieb davon zu steuern; **dadurch gekennzeichnet, dass** die genannte Spritzpistole aufweist: eine Einlassöffnung (31), die hydraulisch mit einem Tank (20) durch die Zwischensetzung eines Solenoidventils (33) verbunden werden kann; eine Auslassöffnung (32), die mit einer fluiddichten rohrförmigen Leitung (300) verbunden ist; **dadurch gekennzeichnet, dass** die genannte rohrförmige Leitung (300) einen jeweiligen Endabschnitt (35) aufweist, der mit einem flüssigkeitsgesteuerten Auslassventil (38) mit einem höheren Druckwert als einem gegebenen Kalibrierungswert versehen ist.

6. Vorrichtung nach Anspruch 5, **dadurch gekennzeichnet, dass** das genannte Ventil (38) mit einer normalerweise offenen Düse (39) versehen ist.

7. Vorrichtung (1) nach Anspruch 6, **dadurch gekennzeichnet, dass** das genannte Ventil (38) vom elastischen Rückschlagtyp ist.

8. Vorrichtung nach einem der Ansprüche 5 bis 7, **dadurch gekennzeichnet, dass** die genannte Auslassöffnung (32) hydraulisch mit dem genannten Tank (20) durch die Zwischensetzung eines Solenoidventils (33) verbunden ist.

9. Vorrichtung nach Anspruch 8, **dadurch gekennzeichnet, dass** die genannte Spritzpistole (30) einen Griff (36) zur Manipulation davon umfasst.

10. Vorrichtung nach Anspruch 9, **dadurch gekennzeichnet, dass** die genannten Steuermittel (70) einen Schalter (72), der elektronisch mit der genannten Pumpe (40) verbunden ist, und Messmittel (74) zum Messen des Zufuhrdrucks der genannten Flüssigkeit L zu dem genannten Ventil (38) umfassen; wobei der genannte Schalter (72) und die genannten Messmittel (74) mit dem genannten Griff (36) zugeordnet sind.

11. Vorrichtung nach Anspruch 10, **dadurch gekennzeichnet, dass** die genannten Druckmessmittel (74) einen Druckmesser (74) umfassen, der hydraulisch mit der genannten Abgabeleitung (52) verbunden ist.

12. Vorrichtung nach einem der vorhergehenden Ansprüche, **dadurch gekennzeichnet, dass** die genannten Steuermittel (70) eine Recheneinheit (75) umfassen, die einen Zeitmesser (77) und eine Speichereinheit (78) enthält.

13. Vorrichtung nach Anspruch 12, **dadurch gekennzeichnet, dass** die genannten Steuermittel (70) eine Geolokalisierungsvorrichtung (79) umfassen, die mit der genannten Speichereinheit (78) verbunden ist, um eine geografische Position mit jedem Betrieb des genannten Schalters (72) zu assoziieren.

## Revendications

1. Pistolet de pulvérisation (30) pour délivrer du liquide (L), ledit pistolet de pulvérisation (30) comportant une poignée (36), une bouche d'entrée (31) associée à ladite poignée (36) et reliée hydrauliquement à un réservoir (20); une bouche de sortie (32) associée à ladite poignée (36) et reliée à un conduit tubulaire étanche aux fluides (300); **caractérisé par le fait que** ledit conduit tubulaire (300) a une partie d'extrémité respective (35) comportant un clapet de sortie commandé par liquide (38) à une valeur de pression supérieure à une valeur de calibrage donnée.

2. Pistolet de pulvérisation selon la revendication 1, **caractérisé par le fait que** ledit clapet (38) comporte une buse normalement ouverte (39).

3. Pistolet de pulvérisation selon la revendication 2, **caractérisé par le fait que** ledit clapet (38) est du type à rappel élastique.

4. Pistolet de pulvérisation selon l'une quelconque des revendications 1 à 3, **caractérisé par le fait que** ladite bouche de sortie (32) est reliée hydrauliquement audit réservoir (20) par l'interposition d'une électrovanne (33).

5. Dispositif (1) pour doser un liquide (L), ledit dispositif (1) comprenant un contenant (10) contenant au moins un réservoir (20) pour ledit liquide (L); un pistolet de pulvérisation (30) selon la revendication 1 relié hydrauliquement audit réservoir (20) et qui peut être alimenté, en utilisation, par une pompe à commande électrique (40) reliée hydrauliquement audit réservoir (20) par l'intermédiaire d'un conduit d'alimentation (50) et audit pistolet de pulvérisation (30) par l'intermédiaire d'un conduit de distribution (52); des moyens d'alimentation électrique (60) reliés électriquement à ladite pompe (40) pour l'actionnement de celle-ci; des moyens de commande (70) reliés électriquement auxdits moyens d'alimentation électrique (60) et électroniquement à ladite pompe (40) pour commander le fonctionnement de celle-ci; **caractérisé par le fait que** ledit pistolet de pulvérisation a une bouche d'entrée (31) apte à être reliée hydrauliquement à un réservoir (20) par l'interposition d'une électrovanne (33); une bouche de sortie (32) étant reliée à un conduit tubulaire étanche aux fluides (300); **caractérisé par le fait que** ledit conduit tubulaire (300) a une partie d'extrémité respective (35) comportant un clapet de sortie commandé par liquide (38) à une valeur de pression supérieure à une valeur de calibrage donnée.

6. Dispositif selon la revendication 5, **caractérisé par le fait que** ledit clapet (38) comporte une buse normalement ouverte (39).

7. Dispositif (1) selon la revendication 6, **caractérisé par le fait que** ledit clapet (38) est du type à rappel élastique.

8. Dispositif selon l'une quelconque des revendications 5 à 7, **caractérisé par le fait que** ladite bouche de sortie (32) est reliée hydrauliquement audit réservoir (20) par l'interposition d'une électrovanne (33).

9. Dispositif selon la revendication 8, **caractérisé par le fait que** ledit pistolet de pulvérisation (30) comprend une poignée (36) pour sa manipulation.

10. Dispositif selon la revendication 9, **caractérisé par le fait que** lesdits moyens de commande (70) comprennent un commutateur (72) relié électroniquement à ladite pompe (40) et des moyens de mesure (74) pour mesurer la pression d'alimentation dudit liquide L audit clapet (38); ledit commutateur (72) et lesdits moyens de mesure (74) étant associés à ladite poignée (36).

11. Dispositif selon la revendication 10, **caractérisé par le fait que** lesdits moyens de mesure de pression (74) comprennent un manomètre (74) relié hydrauliquement audit conduit de distribution (52).

12. Dispositif selon l'une quelconque des revendications précédentes, **caractérisé par le fait que** lesdits moyens de commande (70) comprennent une unité de calcul (75) incorporant un compteur horaire (77) et une unité de mémoire (78) .

13. Dispositif selon la revendication 12, **caractérisé par le fait que** lesdits moyens de commande (70) comprennent un dispositif de géolocalisation (79) relié à ladite unité de mémoire (78) pour associer une position géographique à chaque actionnement dudit commutateur (72).
